# EUROPÄISCHE PATENTSCHRIFT

(11) **EP 0 884 484 B1**
(45) Veröffentlichungstag und Bekanntmachung des Hinweises auf die Patenterteilung: **19.03.2003**
(21) Anmeldenummer: 98107637.5
(22) Anmeldetag: 27.04.1998
(51) Int. Cl.: F15B 11/028, H01H 35/38

(54) **Elektrohydraulische Spannvorrichtung**
Electrohydraulic clamping device
Dispositif de serrage électrohydraulique

(30) Priorität: 10.06.1997 DE 29710129 U
(43) Veröffentlichungstag der Anmeldung: 16.12.1998
(73) Patentinhaber: HEILMEIER & WEINLEIN Fabrik für Oel-Hydraulik GmbH & Co. KG, 81673 München (DE)
(72) Erfinder: Heusser, Martin Dipl.Ing., 81245 München (DE); Neumair, Georg Dipl.Ing., 85402 Thalhausen (DE)
(74) Vertreter: Grünecker, Kinkeldey, Stockmair & Schwanhäusser Anwaltssozietät

(56) Entgegenhaltungen:
- DE-A- 3 232 536
- DE-A- 4 407 370
- DE-A- 4 423 541
- DE-A- 4 423 585
- DE-A- 4 446 538

## Beschreibung

Die Erfindung betrifft eine elektrohydraulische Spannvorrichtung gemäß dem Oberbegriff des Anspruchs 1.

Bei einer aus DE-A-44 23 541 und DE-A-44 23 585 bekannten Spannvorrichtung für eine Werkzeugmaschine ist der Druckschalter mit dem Regelelement des Einstelfventils für den Beaufschlagungsdruck des Hydromotors gekoppelt. Das Einstellventil ist ein Druckminderventil mit einem Regelkolben, dessen Regelfeder über den Stellkolben vom Vorsteuerdruck und vom im Wegesteuerventil leckagebehaftet abgezapften Referenzdruck beaufschlagt wird, um den Spanndruck einzustellen. Der Schaltpunkt ist auf eine bestimmte Position des Regelkolbens eingestellt. Da der Regelkolben die Schaltposition für den Schalter unabhängig davon erreicht, in welcher Verbraucherleitung der eingestellte Beaufschlagungsdruck erreicht wird, ist das vom Schalter abgegebene Signal unter bestimmten Betriebszuständen für eine übergeordnete Steuereinheit mehrdeutig. Ferner wird der Regelkolben des Druckminderventils mit dem vollen Druck aus der Druckquelle beaufschlagt, wodurch unvermeidliche Leckagen einen nachteiligen Einfluß auf die Präzision der Druckeinstellung bzw. Drucküberwachung durch den Schalter gewinnen. In der Praxis werden solche Spannvorrichtungen mit moderaten Drücken, z.B. bis 200 Bar, betrieben, auch weil bei höheren Drücken Leckagen stärker würden. Bei modernen Werkzeugmaschinen gibt es jedoch Einsatzfälle, bei denen bei einem höheren Arbeitsdruckniveau, z.B. bis zu 400 Bar trotzdem hohe Betriebs- oder Systemsicherheit gewährleistet sein sollen. Das Sicherheitsventil, das bei Stromausfall oder NOT-AUS-Betätigung selbsttätig den Stellkolben für die Regelfeder des Regelelementes vom Proportional-Vorsteuerventil trennt, sichert zwar die Aufrechterhaltung des eingestellten Spanndrucks. Die Leckage im Einstellventil kann dennoch zum Ansprechen des Schalters führen. Hinzu kommt, daß auch der Referenzdruck aufgrund der Anzapfung im Wegesteuerventil wegen Leckage instabil wird bzw. die Anzapfung bei hohem Systemdruck einen spürbaren Verlust für die am Hydromotor gebrauchte Leistung bedeutet.

Bei einer aus DE-A-44 46 538 bekannten Werkstück-Spannvorrichtung ist der den Spanndruck überwachende Schalter in einem eigenen Ventil enthalten, in welchem ein Differentialkolben den Vorsteuerdruck mit dem Referenzdruck vergleicht. Anstelle des Schalters kann auch ein Analog-Wegaufnehmer oder eine Kraftmeßvorrichtung vorgesehen sein. Der Aufbau dieser Spannvorrichtung ist kompliziert, vor allem hinsichtlich der Regeltechnik und der erforderlichen Elektronik zur Signalauswertung und -verarbeitung. Da der Vorsteuerdruck höher sein muß als der Referenzdruck, ist ein aufwendiges und großbauendes Proportional-Vorsteuerventil erforderlich, das den vollen Druck der Druckquelle verarbeiten muß. Femer treten auf der Vorsteuerseite unzweckmäßige Leckagen auf.

Weiterer Stand der Technik ist enthalten in DE-A-44 07 370 und DE-A-32 32 536.

Der Erfindung liegt die Aufgabe zugrunde, eine elektrohydraulische Spannvorrichtung der eingangs genannten Art zu schaffen, bei der auch bei höheren Drücken, z.B. bis 400 Bar oder mehr, ein hoher Sicherheitsstandard mit präzise ansprechendem Schalter gewährleistet wird.

Die gestellte Aufgabe wird mit den Merkmalen des Anspruchs 1 gelöst.

Obwohl der Schalter mit dem Differenz-Druckschaltventil baulich getrennt vom Einstellventil angeordnet ist, läßt sich der Schaltpunkt des Schalters ohne direkte Kopplung mit dem Regelelement und elektrisch ferngesteuert über das Proportional-Vorsteuerventil genau an den eingestellten Spanndruck anpassen. Die übergeordnete Steuereinheit erhält unabhängig von der am Proportional-Vorsteuerventil eingestellten Höhe des Spanndrucks die präzise Meldung, ob der Spanndruck erreicht ist, oder nicht. Die Spanndruckmeldung ist eindeutig für die Verbraucherleitung (Bewegungsrichtung des Hydromotors), aus der der Referenzdruck abgeleitet wird. Da der Vorsteuerdruck wesentlich niedriger ist als der Referenzdruck,z.B. unter 30 Bar, und das leckagefrei arbeitende Differenz-Schaltventil den Schaltpunkt des Schalters präzise an den eingestellten Spanndruck anpaßt, eignen sich dafür kleine und leichte Ventilkomponenten und werden auf der Vorsteuerseite Leckagen vermieden. Die Spannvorrichtung ist auch für höhere Systemdrücke von 400 Bar oder mehr geeignet. Das Sicherheitsventil, den Vorsteuerdruck aufrechterhält, ist ebenfalls leckagefrei. Wird auch ein leckagefreier Hydromotor verwendet, dann arbeitet die Peripherie des Schalters verlustfrei. Die Spannvorrichtung ist bevorzugt für Werkstücke und/oder Werkzeuge in Werkzeugmaschinen, insbesondere Automaten, verwendbar, obwohl auch weitere Einsatzbereiche, z.B. in Textilmaschinen, möglich sind.

Gemäß Anspruch 2 ist das Differenz-Druckschaltventil in der Absperrstellung des Sicherheitsventils zu jeder Seite leckagefrei isoliert. Dabei ist es zweckmäßig, wenn in der Werkzeugmaschine, z.B. einer Drehmaschine, einer Bohrmaschine oder einer Fräsmaschine, der Hydromotor leckagefrei arbeitet, damit eine ordnungsgemäße Meldung möglich ist und bei hohen Systemdrücken Leistungsverluste durch Leckagen vermieden werden.

Gemäß Anspruch 3 werden Leckagen bereits beim Abgriff des Referenzdruckes und in der Absperrstellung im Wegesteuerventil vermieden. Das Differenzdruck-Schaltventil und der Schalter sind in ihrer Funktion nicht durch Leckverluste beeinträchtigt Das Wegesteuerventil als auch bei hohen Drücken leichtgängiges Sitzventil auszulegen, läßt sich mit technisch geringem Aufwand realisieren. Es ergibt sich ein hoher Gesamtwirkungsgrad für die Spannvorrichtung, auch bei hohen Systemdrücken.

Das leckagefreie Betriebsverhalten der Spannvorrichtung und der niedrige Vorsteuerdruck, der den Spanndruck bestimmt und sozusagen eine hydraulische Feder für den Schalter definiert, ermöglichen gemäß Anspruch 4, die Druckquelle, z.B. mittels des Signals des Schalters, auf drucklosen Umlauf zu schalten, sobald der eingestellte Verbraucherdruck erreicht ist. Dank des Umlaufdruckes wird der niedrige Vorsteuerdruck dennoch korrekt erzeugt. Dies spart Energie und schont das Hydraulikmedium.

Gemäß Anspruch 5 wird der Eingangsdruck des Proportional-Vorsteuerventils gegenüber dem Systemdruck so reduziert, daß der Vorsteuerdruck noch problemlos erzeugbar und im gewünschten Sinn variierbar bleibt. Die mechanische Belastung auf der Vorsteuerseite wird auf diese Weise, erheblich reduziert, was der Systemsicherheit zugute kommt und die Verwendung kleiner, platzsparender und leichter Ventilkomponenten ermöglicht.

Damit das Sicherheitsventil seine vorbestimmte Sicherheitsfunktion jederzeit erbringt, um den eingestellen Beaufschlagungsdruck bzw. Spanndruck halten zu können und das ordnungsgemäß Ansprechen des Schalters zu gewährleisten, ist gemäß Anspruch 6 auch die Feder des Sicherheitsventils so auf den Vorsteuerdruck abgestimmt, daß das Sicherheitsventil sperrt, ehe der Vorsteuerdruck sinken kann.

Die Systemsicherheit der Spannvorrichtung wird femer gemäß Anspruch 7 durch einen Funktionsmelder am Sicherheitsventil erhöht, der beispielsweise bei einem Kabelbruch, einem Stromausfall, einem Pumpenausfall oder einem Leitungsbruch die übergeordnete Steuereinheit informiert, die aufgrund der Spanndruckmeldung die Störung zunächst nicht feststellen können. Die Störung ließe sich gegebenenfalls erst feststellen, wenn sich der Spanndruck nicht mehr verstellen läßt. Dann könnten jedoch Schäden aufgetreten oder nicht mehr zu verhindern sein.

Gemäß Anspruch 8 wird für den Vorsteuerdruck ein eigener Steuerdruckkreis, gegebenenfalls mit einer eigenen Pumpe, verwendet Dies hat den Vorteil, daß das Hydraulikmedium für die Vorsteuerung nicht zuvor unnötig auf den hohen Systemdruck gebracht zu werden braucht, und der Vorsteuerbereich unabhängig von der Höhe des Systemdrucks ist. Femer läßt sich ein Zusatz-Druckminderventil stromauf des Proportional-Vorsteuerventils einsparen.

Gemäß Anspruch 9 wird, insbesondere für einen Speicherladebetrieb mittels eines Druckspeichers, bei auf drucklosen Umlauf geschalteter Druckquelle die ordnungsgemäße Versorgung des Proportional-Vorsteuerventils mit dem zum Einstellen des Vorsteuerdrucks notwendigen Druck gewährleistet. Da die volle Förderleistung der Druckquelle nur zum Laden des Speichers benötigt wird, arbeitet die Spannvorrichtung effektiv und für das Hydraulikmedium schonend.

Gemäß Anspruch 10 meldet der Schalter den Spanndruck nur in einer Verbraucherleitung des Hydromotors, so daß die übergeordnete Steuereinheit präzise darüber informiert wird, ob in dieser Arbeitsrichtung des Hydromotors der Spanndruck erreicht worden ist oder nicht.

Gemäß Anspruch 11 werden beide Arbeitsrichtungen des Hydromotors jeweils getrennt überwacht und der übergeordneten Steuereinheit aussagefähige Signale übermittelt. Es ist möglich, in beiden Verbraucherleitungen, z.B. bei einem doppelseitig beaufschlagbaren Hydromotor, unterschiedliche Drücke zu überwachen.

Gemäß Anspruch 12 wird eine Verbraucherleitung überwacht oder die jeweils den höheren Verbraucherdruck führende Verbraucherleitung. Um der übergeordneten Steuereinheit dennoch aussagefähige Signale zur überwachten Arbeitsrichtung des Hydromotors zu geben, kann hierfür eine zusätzliche Überwachungsvorrichtung vorgesehen sein.

Gemäß Anspruch 13 wirkt im Differenz-Druckschaltventil die Feder gegen den Vorsteuerdruck, damit das Differenz-Druckschaltventil über den gesamten Druckbereich des Proportional-Vorsteuerventils dem Schalter ein die Relation zwischen Referenzdruck und Vorsteuerdruck präzise repräsentierendes Vergleichsresultat anbietet. Der Schaltpunkt des Schalters liegt über den gesamten Druckbereich des Einstellventils bzw. Strombereich des Proportional-Vorsteuerventils möglichst knapp unterhalb des Spanndrucks. Aufgrund der Schalterhysterese gibt es zwar einen oberen und einen unteren Schaltpunkt knapp unterhalb des Spanndrucks. Ohne die Feder würde sonst bei niedrigem Spanndruck der Schaltpunkt oberhalb des Spanndruckes liegen oder bei hohem Spanndruck zu weit unterhalb des Spanndrucks. Die Feder schmiegt sozusagen alle Schaltpunkte eng an die Druckkurve des Spanndruckes an.

Anhand der Zeichnung werden Ausführungsformen des Erfindungsgegenstandes erläutert. Es zeigen:
- Fig. 1: in Form eines Blockschaltbildes eine erste Ausführungsform einer elektrohydraulischen Spannvorrichtung, insbesondere einer Werkstück- oder Werkzeug-Spannvorrichtung,
- Fig. 2: ein Blockschaltbild einer weiteren Ausführungsform,
- Fig. 3: ein Blockschaltbild einer weiteren Ausführungsform,
- Fig. 4: ein Blockschaltbild einer weiteren Ausführungsform,
- Fig. 5: ein Blockschaltbild einer weiteren Ausführungsform,
- Fig. 6: ein Blockschaltbild einer weiteren Ausführungsform, und
- Fig. 7: eine Ausführungsform einer Komponente, wie sie in den elektrohydraulischen Spannvorrichtungen gemäß den Fig. 1 bis 6 zum Überwachen des Spanndrucks verwendbar ist.

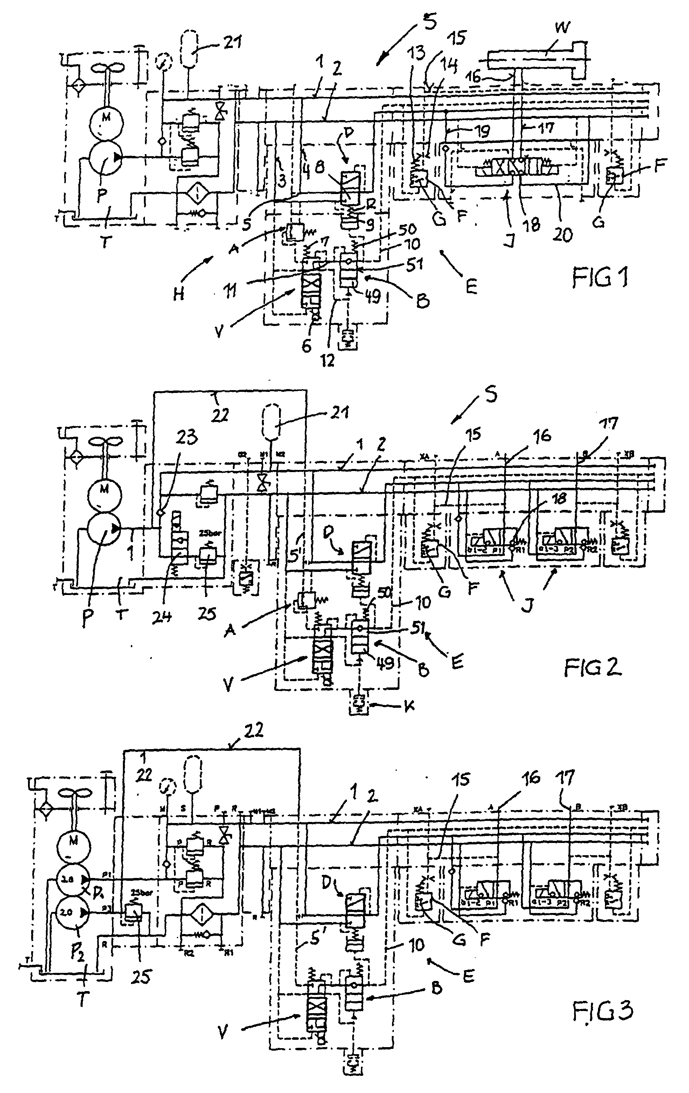

Eine elektrohydraulische Spannvorrichtung S in Fig. 1 ist z.B. Teil einer Werkzeugmaschine, wie einer Dreh-, einer Fräs- oder eine Bohrmaschine, meist eines Werkzeugmaschinenautomaten, und dient zum Spannen eines Werkstücks oder Werkzeugs. Die Spannvorrichtung wird durch eine übergeordnete, nicht gezeigte Steuereinheit (elektronisches Steuersystem) geführt, die beispielsweise mittels elektrischer Signale über Operationsschritte, Zustände, den Spanndruck oder dgl. laufend informiert wird. Zur hydraulischen Versorgung ist eine Druckquelle P, getrieben durch einen Motor M, vorgesehen, die aus einem Rücklauf T ansaugt und das Hydraulikmedium in eine Pumpenleitung 1 drückt. Zum Rücklauf T führt eine Rücklaufleitung 2. Gesteuert wird ein Hydromotor W, z.B. ein einfach wirkender oder doppelt wirkender Hydraulikzylinder oder Hydraulikmotor, der über Verbraucherleitungen 16, 17 und ein Wegesteuerventil J mit einer Druckleitung 19 einerseits und einer Rücklaufleitung 20 andererseits verbunden bzw. verbindbar ist. Das Wegesteuerventil J ist ein 4/3-Wegeventil mit zwei Steuerstellungen und einer Absperrstellung und ist zweckmäßigerweise als Sitzventil (bei 18) ausgebildet, so daß es in Absperrstellungen leckagefrei ist. Die Druckleitung 19 ist an einen Regelausgang eines Einstellventils D (im gezeigten Fall eines druckregelnden Druckminderventils) angeschlossen, das über eine Leitung 4 mit der Pumpenleitung 1 und eine Leitung 3 mit der Rücklaufleitung 2 verbunden ist. Das Einstellventil D ist Teil einer Einstell-Vorrichtung E des hydraulischen Steuerkreises H der Spannvorrichtung S. Mit der Einstellvorrichtung E wird der Beaufschlagungsdruck in jeder Verbraucherleitung 16,17 auf eine gewünschte Höhe eingestellt (Spanndruck), durch den regelnden Eingriff des Einstellventils D gehalten, und bei Bedarf verändert. Beispielsweise können für eine Schlicht- oder eine Schruppbearbeitung eines Werkstücks unterschiedliche Spanndrücke benötigt werden.

In der Einstellvorrichtung E sind ferner ein Zusatz-Druckminderventil A, ein Proportional-Vorsteuerventil V und ein Sicherheitsventil B vorgesehen. Zur genauen Funktionsweise und zum Aufbau des Proportional-Vorsteuerventils V und des Sicherheitsventils W wird hingewiesen auf DE-A-44 23 585 und DE-A-44 23 541.

Das Erreichen, Verfehlen oder Unterschreiten des Spanndrucks im Hydromotor W wird mittels wenigstens eines elektrischen Schalters G an die übergeordnete Steuereinheit gemeldet. Der Schalter G ist in einem Differenzdruck-Schaltventil F angeordnet oder baulich mit diesem verbunden. In Fig. 1 ist für beide Verbraucherleitungen 16, 17 jeweils ein Differenz-Druckschaltventil F mit einem Schalter G vorgesehen.

Von der Leitung 4 zweigt eine Steuerleitung 5 zum Zusatz-Druckminderventil A und einem Eingang des Proportional-Vorsteuerventils V ab. Das Proportional-Vorsteuerventil V ist ein Druckregelventil mit einer zusätzlichen Wegefunktion und wird betätigt mittels eines Proportionalmagneten 6, der gegen eine Regelfeder 7 wirkt. Vom Proportional-Vorsteuerventil V führt eine Steuerleitung 11 zum Sicherheitsventil B, dessen Ausgang über eine Steuerleitung 10 mit einer Beaufschlagungskammer eines Stellkolbens 9 und mit einer Seite des Differenzdruck-Schaltventils F verbunden ist. Die andere Seite des Differenzdruck-Schaltventils F ist über eine Steuerleitung 15 mit der Verbraucherleitung 16 verbunden. Ein bewegliches Element des Differenzdruck-Schaltventils F wird durch eine Feder 13 in Wirkrichtung eines in der Steuerleitung 15 aus der Verbraucherleitung 16 vom Spanndruck abgeleiteten Referenzdrucks beaufschlagt In der Steuerleitung 10 wird ein vom Proportional-Vorsteuerventil V in Abhängigkeit von der Bestromung des Proportionalmagneten 6 abhängiger Vorsteuerdruck eingesteuert, der das Element des Differenzdruck-Schaltventils F in der entgegengesetzten Richtung beaufschlagt. In der Steuerleitung 15 ist vor dem Differenzdruck-Schaltventil F ein Drossel 14 enthalten.

Das Sicherheitsventil B ist in Fig. 1 ein hydraulisch entsperrbares Sitzventil 51 (2/2-Schaltventil oder Kugel-Rückschlagventil), das ein durch eine Feder 50 und den Druck in der Steuerleitung 11 in Schließrichtung beaufschlagtes Element 49 (Entsperrkolben) enthält, das in Öffnungsrichtung vom Druck in der Steuerleitung 12 beaufschlagbar ist (Entsperrdruck zum hydraulischen Entsperren).

Der Stellkolben 9 dient als hydraulisch verstellbares Widerlager für eine Regelfeder R eines Ventilelementes 8 (Regelkolben) des das Einstellventil D bildenden Druckminderventils. Der in seiner Höhe von der Bestromung des Proportionalmagneten 6 abhängige Vorsteuerdruck, den das Proportional-Vorsteuerventil V unabhängig von Druckänderungen in der Steuerleitung 10 einregelt, bestimmt über den Stellkolben 9 die wirksame Federkraft der Regelfeder R und somit die Druckhöhe des Spanndrucks in der Beaufschlagungsleitung 16 bzw. 17. Zweckmäßig wird ein Vorsteuerdruck > 30 Bar vom Proportional-Vorsteuerventil V eingesteuert, während der Systemdruck oder der Verbraucherdruck wesentlich höher und bis zu 400 Bar oder mehr beträgt. Da das Verhältnis zwischen dem Vorsteuerdruck und dem Spanndruck bzw. Beaufschiagungsdruck über den gesamten Arbeitsbereich gleich bleibt, kann der Schalter G mittels des das auf das Verhältnis zwischen dem Vorsteuerdruck und dem Spanndruck bzw. dem Referenzdruck abgestimmte Differenzdruck-Schaltventils F, das korrekte Erreichen des Spanndrucks (oder das Verfehlen bzw. das Unterschreiten) der übergeordneten Steuereinheit melden. Der Schalter G und das Differenzdruck-Schaltventil F sind derart aufeinander abgestimmt, daß der Schalter G bei Erreichen des vorbestimmten Verhältnisses den Spanndruck durch Ansprechen meldet, hingegen bei einer Veränderung des Verhältnisses, beispielsweise durch Absinken des Referenzdrucks, nicht anspricht. Eine umgekehrte Verschaltung ist ebenfalls möglich, d.h., daß der Schalter bei Vorliegen des Spanndrucks keine Meldung abgibt, sondern erst bei Verfehlen des Spanndrucks. Im Regelfall wird jedoch eine Meldung "Spanndruck erreicht" abgegeben, aufgrund dere die übergeordnete Steuereinheit den nächsten Bearbeitungsschritt einleitet.

Das Differenz-Druckschaltventil F arbeitet leckagefrei. Der Hydromotor W ist zweckmäßigerweise ebenfalls leckagefrei. Das Wegesteuerventil J sperrt die Beaufschlagungsleitung 16, 17 in seiner Absperrstellung leckagefrei ab. Das Sicherheitsventil B, das bei einer Funktionsstörung (Kabelbruch, Stromausfall, Pumpenausfall, Leitungsbruch oder dgl.), dank der Feder 50 selbsttätig in die Absperrstellung geht, hält den Vorsteuerdruck leckagefrei, wie auch der Stellkolben 9 des Einstellventils D. Dies bedeutet, daß bei einer Funktionsstörung der Spanndruck unverändert aufrechterhalten bleibt und auch eine korrekte Meldung des Schalters G möglich ist.

Falls erforderlich, wird auch die zweite Beaufschlagungsleitung 17 durch ein Differenz-Druckschaltventil F und einen Schalter G überwacht, gegebenenfalls jedoch auf einer anderen Druckhöhe. In der Pumpenleitung 1 kann ein gestrichelt angedeuteter Druckspeicher 21 vorgesehen sein, der mittels der Pumpe P geladen wird. Bei geladenem Druckspeicher 21 kann die Pumpe P auf drucklosen Umlauf geschaltet werden, wobei der Umlaufdruck höher als der Vorsteuerdruck sein sollte.

Die Ausführungsform in Fig. 2 unterscheidet sich von der in Fig. 1 dadurch, daß das Wegesteuerventil J aus zwei baulich getrennten 3/2-Wegeventilen in Sitzventilbauweise (Sitzventil 18) gebildet ist, deren jedes in nur einer Verbraucherleitung 16, 17 angeordnet ist (entweder für nur einen Hydromotor oder für zwei Hydromotoren). Ferner ist ein vom Arbeitsdruckkreis (Pumpenleitung 1 und Rücklaufleitung 2) getrennter Steuerdruckkreis 22 vorgesehen, an den die Steuerleitung 5' zum Zusatz-Druckminderventil A bzw. zum Proportional-Vorsteuerventil V anschließt. Bei der Pumpe P ist eine elektrische Umschaltvorrichtung (Magnetventil 24 mit nachgeordnetem Druckbegrenzer 25) vorgesehen, um nach Laden des Druckspeichers 21 die Pumpe P auf drucklosen Umlauf zu schalten, wobei die Pumpenleitung 1 zwischen dem Druckspeicher 21 und dem Steuerdruckkreis 22 durch ein in Rückströmrichtung sperrendes Rückschlagventil 23 abgesichert ist. Nach der Umschaltung auf drucklosen Umlauf (in Fig. 2 dargestellt) fördert die Pumpe P über den Druckbegrenzer 25 zum Rücklauf T, wobei der Druckbegrenzer 25, z.B. eingestellt auf 25 Bar, im Steuerdruckkreis 22 einen Druck hält, der ausreicht, den erforderlichen Vorsteuerdruck einzustellen. Beim Sicherheitsventil B ist eine Funktionsüberwachungsvorrichtung K vorgesehen, die einen elektrischen Schalter enthält, der mit der übergeordneten Steuereinheit verbunden ist, um eine Meldung zu geben, falls das Sicherheitsventil B bei einer Funktionsstörung (Kabelbruch, Stromausfall oder dgl.) die Absperrstellung eingenommen bzw.und der vom Proportional-Vorsteuerventil eingespeiste Druck unzulässig abgefallen ist. Zweckmäßigerweise ist der Schalter auf einen Ansprechdruck (oder die Absperrposition des Sicherheitsventils) eingestellt, der höher ist als der maximal einstellbare Vorsteuerdruck und niedriger als der zum Überwinden der Feder 50 erforderliche Entsperrdruck in der Steuerleitung 12.

In der Ausführungsform in Fig. 3 sind im Unterschied zur Ausführungsform in Fig. 2 eine erste und eine zweite Pumpe P1 und P2 vorgesehen, wobei die Pumpe P1 eine größere Förderleistung hat als die Pumpe P2. Die Pumpe P2 versorgt nur den eigenen Steuerkreis 22, der über die Steuerleitung 5' an den Eingang des Proportional-Vorsteuerventils V angeschlossen ist. Da der Steuerkreis 22 durch den Druckbegrenzer 25 auf einem niedrigen Druck, beispielsweise 25 Bar, abgesichert ist, kann das Zusatz-Druckminderventil A von Fig. 2 entfallen. Die erste Pumpe P1 versorgt die Pumpenleitung 1 mit einem wesentlich höheren Druck, der bis zu 400 Bar und mehr betragen kann, abhängig vom gewünschten Spanndruck, oder abhängig davon, ob noch weitere, in der Figur nicht dargestellte Verbraucher angeschlossen sind, die gegebenfalls auf einen hohen Systemdruck angewiesen sind.

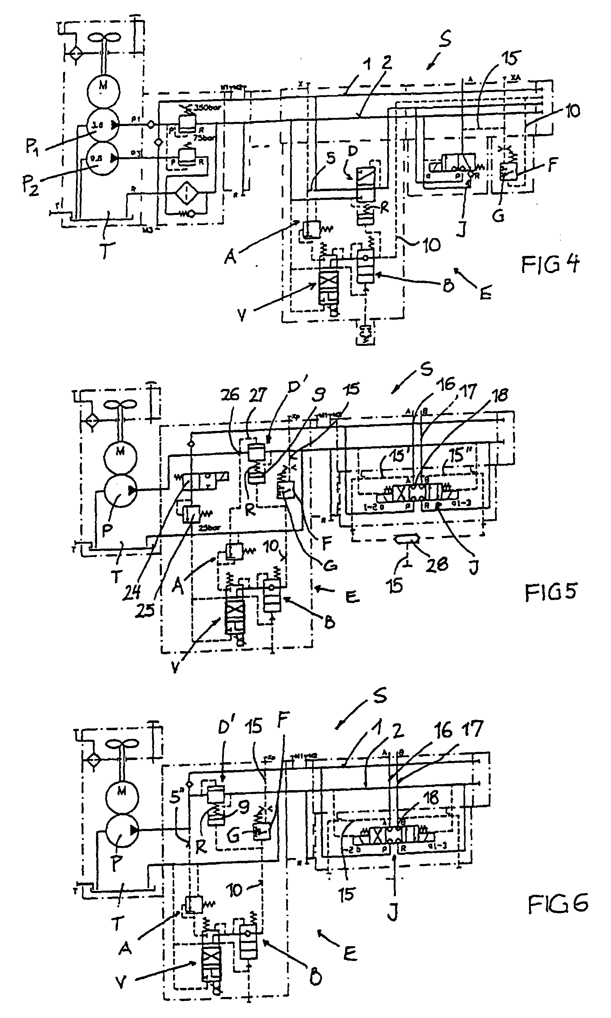

In der Ausführungsform in Fig. 4 ist im Unterschied zur Ausführungsform in Fig. 2 nur ein Wegesteuerventil J in der Verbraucherleitung 16 vorgesehen, das als 3/2-Wegesteuerventil ausgebildet ist. Für die Verbraucherleitung 16 dient das Differenz-Druckschaltventil F mit dem Schalter G, das in der nicht gezeigten Steuerstellung des Wegesteuerventils J den Druck in der Verbraucherleitung 16 überwacht. Als Druckquelle sind eine Pumpe P1 mit mittlerer Förderleistung und eine Pumpe P1 mit hoher Förderleistung vorgesehen. Die Pumpe P1 erzeugt z.B. einen hohen Systemdruck von 350 Bar, während die zweite Pumpe P2 einen niedrigeren Systemdruck von beispielsweise nur 75 Bar erzeugt. In dem angedeuteten Zwischenraum zwischen der Druckquelle und der Einstellvorrichtung E können weitere, nicht gezeigte Verbraucher vorgesehen sein. Das Einstellventil D ist in Fig. 4 ein Druckminderventil.

In der Ausführungsform vonFig. 5 ist im Unterschied zu den vorhergehenden Ausführungsformen das Einstellventil D' für den Verbraucherdruck ein Druckbegrenzungsventil (anstelle eines regelnden Druckminderventils), das den Druck in der Pumpenleitung 1 auf eine Höhe begrenzt, die durch die Regelfeder R bzw. den Vorsteuerdruck auf dem Stellkolben 9 der Regelfeder R eingestellt ist. Die Steuerleitung 5" zum Zusatz-Druckminderventil A stromauf des Porportional-Vorsteuerventils V und eine Vorsteuerleitung 27 des Druckbegrenzungsventils D' zweigen an einem Punkt 26 von der Pumpenleitung 1 ab. Das Wegesteuerventil J ist ein 4/3-Wegeventil in Sitzventilbauweise, das direkt an die Pumpenleitung 1 angeschlossen ist. Von den Verbraucherleitungen 16, 17 zweigen die Steuerleitungen 15', 15" ab, die, gegebenenfalls, zu einem Wechselventil 28 führen, von dem die Steuerleitung 15 zum Differenzdruck-Schaltventil F des Schalters G führt. Sofern nur eine Verbraucherleitung 16 oder 17 überwacht werden soll, wird die jeweilige Steuerleitung 15' oder 15" direkt mit der Steuerleitung 15 verbunden. Die Druckquelle P, beispielsweise eine Konstantförderpumpe P, weist eine elektrische Umschaltvorrichtung zum Umschalten auf drucklosen Umlauf zum Rücklauf T auf, und zwar das Magnetventil 24 mit dem nachgeordneten Druckbegrenzer 25, der beispielsweise auf einen Umlaufdruck von 25 Bar eingestellt ist, um bei drucklosem Umlauf dennoch für das Proportional-Vorsteuerventil V die zum Erzeugen des Vorsteuerdrucks in der Steuerleitung 10 erforderliche Druckhöhe zu gewährleisten. Bei drucklosem Umlauf sperrt das Rückschlagventil 23 in der Pumpenleitung 1.

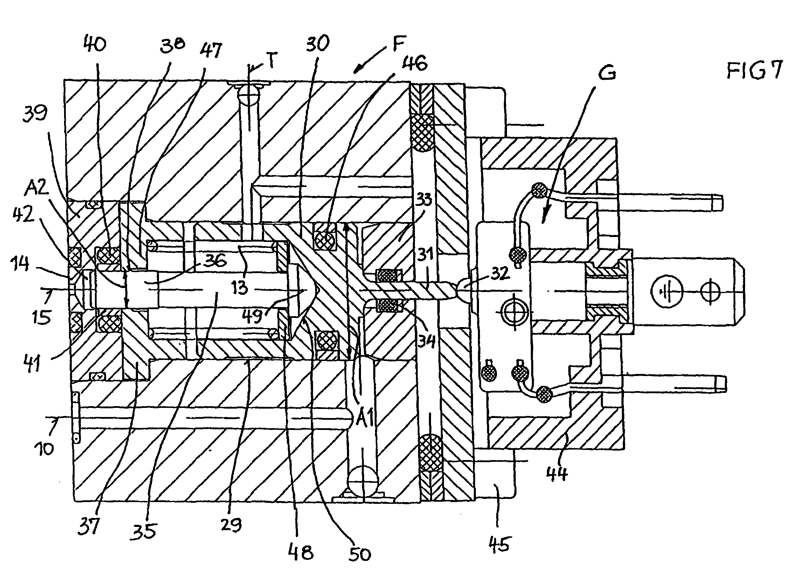

In Fig. 6 ist ähnlich wie in Fig. 5 das Einstellventil D' ein Druckbegrenzungsventil, das den Druck in der Pumpenleitung auf eine Druckhöhe begrenzt, die abhängt von dem am Proportional-Vorsteuerventil V eingestellten Vorsteuerdruck in der Steuerleitung 10. Die Steuerleitung 5" zum Zusatz-Druckminderventil A zweigt stromauf des Einstellventils D' an der Pumpenleitung 1 ab. Die Steuerleitung 15 kann entweder an eine Verbraucherleitung oder über ein Wechselventil an beide Verbraucherleitungen angeschlossen werden.

In Fig. 7 ist in einer Gehäusebohrung 29 des Differenzdruck-Schaltventils F mit Dichtmitteln 46 ein Topfkolben 30 mit einer großen Beaufschlagungsfläche A1 abgedichtet verschieblich geführt, der mit einem Stößel 31 auf ein Betätigungselement 32 des Schalters G ausgerichtet ist. Der Stößel 31 durchsetzt eine Dichtung 34 eines Verschlußstücks 33. Ferner wird in der Gehäusebohrung 29 ein Kolben 35 abgedichtet verschieblich geführt, der einen Zylinderabschnitt 36 mit einer Beaufschlagungsfläche A2 aufweist, die erheblich kleiner ist als die Beaufschlagungsfläche A1. Das Verhältnis zwischen den Beaufschlagungsflächen kann zwischen 1:5 und 1:30 betragen, abhängig davon, in welchem Verhältnis der Vorsteuerdruck zum Referenzdruck steht. Der Kolben 35 ist mit seinem Zylinderabschnitt 36 in einer Durchgangsbohrung 38 eines Scheibenkörpers 37 geführt, der in der Gehäusebohrung 29 positioniert ist. Angrenzend an den Scheibenkörper 37 ist ein Verschlußstück 39 vorgesehen, das in einer Dichtung 40 eine Gleithülse 41 hält, in der der Zylinderabschnitt 36 geführt wird. Das Verschlußstück 31 begrenzt mit dem Scheibenkörper 37 eine Kammer 42, die über die Drossel 14 (s. Fig. 1) an die Steuerleitung 15 für den Referenzdruck angeschlossen ist. Die Steuerleitung 10 für den Vorsteuerdruck führt zur Beaufschlagungsfläche A1 des Topfkolbens 30. Der Scheibenkörper 37 bildet ein Federwiderlager 47 für die Vorspannfeder 13 (s. Fig. 1), die über einen Ringkörper 48 als weiteres Federwiderlager den Kolben 35 im gleichen Sinn beaufschlagt wie der. Der Kolben 35 taucht in den Innenraum des Topfkolbens 30 ein und trägt am freien Ende einen Mitnehmerkopf 49, der ballig ausgebildet ist und mit einer Mitnehmerfläche 50 von vorzugsweise kegeliger Form am Boden des Topfkolbens 30 zusammenarbeitet. Der Schalter G, beispielsweise ein Mikroschalter, ist in einem Schaltergehäuse 44 an geordnet, das zweckmäßigerweise in einem Rahmen 45 verstellbar ist, um den Schaltpunkt einjustieren oder verstellen zu können. Der Rahmen 44 ist am Differenzdruck-Schaltventil F befestigt.

In Fig. 7 ist der Spanndruck ordnungsgemäß erreicht. Der Kolben 35 drückt zusammen mit der Feder 13 den Stößel 31 gegen das Betätigungselement 32. Der Schalter G meldet "Spanndruck erreicht". Sinkt der Referenzdruck aus dem Spanndruck, dann verstellt sich der Topfkolben 30 unter dem Vorsteuerdruck nach links, bis der Stößel 31 das Betätigungselement 32 freigibt. Der Schalter G meldet "Spanndruck nicht vorhanden oder verfehlt oder unterschritten".

Wird durch Verstellen des Proportionalmagneten 6 der Vorsteuerdruck angehoben, dann verschiebt sich der Topfkolben 30 aus der Lage gemäß Fig. 7 nach links. Der Schalter G meldet "Spanndruck nicht vorhanden". Sobald über das Einstellventil D bzw. D' der Verbraucherdruck entsprechend dem neuen Wert des Vorsteuerdrucks angehoben ist, verstellt sich der Topfkolben 30 erneut nach rechts, bis der Schalter G meldet "Spanndruck erreicht".

## Patentansprüche

1. Elektrohydraulische Spannvorrichtung (S), insbesondere für ein Werkzeug oder ein Werkstück in einer Werkzeugmaschine, mit einem Spannhydromotor (W), der mittels eines in wenigstens einer Verbraucherleitung angeordneten Wegesteuerventils (J) und einer elektrisch verstellbaren Spanndruck-Einstellvorrichtung (E) an eine Druckquelle (P, P1, P2) bzw. einen Rücklauf (T) anschließbar ist, wobei die Spanndruck-Einstellvorrichtung (E) aufweist:
ein vorgesteuertes Einstellventil (D, D') stromauf des Wegesteuerventils (J) für den Beaufschlagungsdruck des Hydromotors (W), das ein von einer Regelfeder (R) belastetes Regelelement (8) zum Einstellen des Beaufschlagungsdrucks aufweist, welche Regelfeder (R) mittels eines Stellkolbens (9) hydraulisch durch einen Vorsteuerdruck in ihrer wirksamen Federkraft verstellbar ist,
ein Proportional-Vorsteuerventil (V) zwischen dem Stellkolben (9) und der Druckquelle (P, P1, P2) bzw. dem Rücklauf (T) zum Einstellen des Vorsteuerdrucks für den Stellkolben (9) in Abhängigkeit von der Bestromung eines Proportional-Magneten (6),
ein zwischen dem Proportional-Vorsteuerventil (V) und dem Stellkolben (9) angeordnetes Sicherheitsventil (B) zum leckagefreien, selbsttätigen Abtrennen des Stellkolbens (9) vom Proportional-Vorsteuerventil (V) wenigstens bei Stromausfall oder NOT-AUS-Betätigung,
und wenigstens einen elektrischen Schalter (G), der mittels eines vom Beaufschlagungsdruck des Hydromotors abgeleiteten Referenzdrucks mit einem Signal das Erreichen, Verfehlen oder Unterschreiten des eingestellten Beaufschlagungsdrucks meldet, **dadurch gekennzeichnet, daß** zur Betätigung des Schalters (G) ein baulich vom Regelelement (8) des Einstellventils (D, D') getrenntes Differenzdruck-Schaltventil (F) vorgesehen ist, das vom Referenzdruck gegen den gegenüber dem Referenzdruck wesentlich niedriger eingestellten Vorsteuerdruck beaufschlagbar ist, und daß der Schaltpunkt des Schalters (G) mittels des Proportional-Vorsteuerventils (V) elektrohydraulisch an den jeweils eingestellten Beaufschlagungsdruck anpaßbar ist.

2. Vorrichtung nach Anspruch 1, **dadurch gekennzeichnet, daß** das Differenzdruck-Schaltventil (F) in der Absperrstellung der Spannvorrichtung (S) von der Druckquelle (P, P1, P2) bzw. dem Rücklauf (T) und dem Proportional-Vorsteuerventil (V) jeweils leckagefrei isolierbar ist.

3. Vorrichtung nach Anspruch 2, **dadurch gekennzeichnet, daß** das Wegesteuerventil (J) zwischen einer Absperrstellung und wenigstens einer Steuerstellung verstellbar und als Sitzventil (18) mit leckagefreier Absperrstellung der zum Hydromotor (W) führenden Verbraucherleitung (16, 17) ausgebildet ist, und daß eine Referenzdruck- Steuerleitung (15) zwischen dem Wegesteuerventil (J) und dem Hydromotor (W) von der Verbraucherleitung (16, 17) abzweigt.

4. Vorrichtung nach Anspruch 1, **dadurch gekennzeichnet, daß** die Druckquelle (P, P1, P2), z.B. wenigstens eine Konstant-Förder-Pumpe, auf drucklosen Umlauf schaltbar ist, z.B. mittes des Signals des Schalters (G) bei Erreichen des eingestellten Verbraucherdrucks, und daß der Umlaufdruck etwa dem maximalen Vorsteuerdruck entspricht, vorzugsweise geringfügig höher ist als dieser.

5. Vorrichtung nach wenigstens einem der Ansprüche 1 bis 4, **dadurch gekennzeichnet, daß** stromauf des Proportional-Vorsteuerventils (V) ein Zusatz-Druckminderventil (A) vorgesehen ist, das aus dem Druck von der Druckquelle (P, P1, P2), vorzugsweise einer Konstantförderpumpe, einen reduzierten Eingangsdruck für das Proportional-Vorsteuerventil (V) ableitet, welcher, vorzugsweise geringfügig, höher ist als der maximal einstellbare Vorsteuerdruck.

6. Vorrichtung nach Anspruch 3, **dadurch gekennzeichnet, daß** das Sicherheitsventil (B) ein durch eine Feder (50) in Richtung auf die leckagefreie Absperrstellung beaufschlagtes Ventilelement (49) aufweist, und daß die Feder (50) auf einen höheren, vorzugsweise um ca. 10 bis ca. 100 % höheren, Druckwert eingestellt ist als der maximal einstellbare Vorsteuerdruck.

7. Vorrichtung nach Anspruch 1, **dadurch gekennzeichnet, daß** das Sicherheitsventil ein hydraulisch entsperrbares Sitzventil (51) ist und einen Funktionsmelder (K) aufweist, vorzugsweise einen elektrischen Schalter (S) oder einen Druckschalter, der eingestellt ist auf einen eine elektrische oder hydraulische Funktionsstörung repräsentierenden Ansprech-Druckwert oder eine Ansprech-Position einer Komponente des Sicherheitsventils (B).

8. Vorrichtung nach wenigstens einem der vorhergehenden Ansprüche, **dadurch gekennzeichnet, daß** ein eigener, an den Eingang des Proportional-Vorsteuerventils (V) angeschlossener Steuerdruckkreis (22), vorzugsweise mit einer eigenen Kontant-Förder-Pumpe (P2 vorgesehen ist, und daß der Druck im Steuerdruckkreis (22) auf einen den maximal einstellbaren Vorsteuerdruck nur geringfügig übersteigenden Druck, z.B durch einen Druckbegrenzer (25), eingestellt ist.

9. Vorrichtung nach einem der vorhergehenden Ansprüche, **dadurch gekennzeichnet, daß** wenigstens eine die Druckquelle bildende Pumpe (P), insbesondere für Speicherladebetrieb mittels eines Druckspeichers (21), über ein in Rückströmrichtung sperrendes Rückschlagventil (23) mit dem Einstellventil (D, D') und stromauf des Rückschlagventils (23) parallel mit dem Eingang des Proportional-Vorsteuerventils (V), vorzugsweise über ein Zusatz-Druckminderventil (A), verbunden ist, und daß eine elektrische Umschaltvorrichtung (24, 25) für drucklosen Umlauf der Pumpe mit einem Umlaufdruck vorgesehen ist, der auf einen Druckwert knapp oberhalb des maximal einstellbaren Vorsteuerdrucks begrenzt ist.

10. Vorrichtung nach wenigstens einem der vorhergehenden Ansprüche, **dadurch gekennzeichnet, daß** das Differenzdruck-Schaltventil (F) über die Referenzdruck- Steuerleitung (15) an nur eine Verbraucherleitung (16 oder 17) angeschlossen ist.

11. Vorrichtung nach wenigstens einem der vorhergehenden Ansprüche, **dadurch gekennzeichnet, daß** für jede Verbraucherleitung (16, 17) ein eigenes Differenzdruck-Schaltventil (F) mit einem Schalter (G) vorgesehen ist.

12. Vorrichtung nach wenigstens der vorhergehenden Ansprüche, **dadurch gekennzeichnet, daß** die Referenzdruck- Steuerleitung (15) über ein Wechselventil (28) an zwei Verbraucherleitungen (16, 17) angeschlossen und druckabhängig über das Wechselventil (28) mit der Verbraucherleitung (16 oder 17) mit dem jeweils höheren Verbraucherdruck verbindbar ist.

13. Vorrichtung nach wenigstens einem der vorhergehenden Ansprüche, **dadurch gekennzeichnet, daß** das Differenzdruck-Schaltventil (F) eine entgegen dem Vorsteuerdruck wirkende Feder (13) enthält.

## Claims

1. Electrohydraulic clamping device (S), in particular for a tool or a workpiece in a machine tool, with a hydraulic clamping motor (W), which is connectable to a pressure source (P, P1, P2) or return (T) by means of a path control valve (J) arranged in at least one consumer line and of an electrically adjustable clamping-pressure setting device (E), the clamping-pressure setting device (E) having:
a pilot-controlled setting valve (D, D'), upstream of the path control valve (J), for the action pressure of the hydraulic motor (W), the said setting valve having a regulating element (8), loaded by a regulating spring (R), for setting the action pressure, the said regulating spring (R) being adjustable in its effective spring force hydraulically by a pilot pressure by means of an adjusting piston (9),
a proportional pilot valve (V) between the adjusting piston (9) and the pressure source (P, P1, P2) or the return (T), for setting the pilot pressure for the adjusting piston (9) as a function of the current flow through a proportional magnet (6),
a safety valve (B), arranged between the proportional pilot valve (V) and the adjusting piston (9), for the leakage-free automatic separation of the adjusting piston (9) from the proportional pilot valve (V) at least in the event of a power failure or EMERGENCY-OFF actuation,
and at least one electrical switch (G) which, by a signal, signals the reaching, absence or undershooting of the set action pressure by means of a reference pressure derived from the action pressure of the hydraulic motor, **characterized in that**, for the actuation of the switch (G), a differential-pressure switching valve (F) is provided, which is structurally separated from the regulating element (8) of the setting valve (D, D') and which can be acted upon by the reference pressure counter to the pilot pressure which is set substantially lower than the reference pressure, and **in that** the switching point of the switch (G) can be adapted electrohydraulically to the respectively set action pressure by means of the proportional pilot valve (V).

2. Device according to Claim 1, **characterized in that**, in the shut-off position of the clamping device (S), the differential-pressure switching valve (F) can be isolated, in each case leakage-free, from the pressure source (P, P1, P2) or from the return (T) and the proportional pilot valve (V).

3. Device according to Claim 2, **characterized in that** the path control valve (J) is adjustable between a shut-off position and at least one control position and is designed as a seat valve (18) with a leakage-free shut-off position of the consumer line (16, 17) leading to the hydraulic motor (W), and **in that** a reference-pressure control line (15) branches off from the consumer line (16, 17) between the path control valve (J) and the hydraulic motor (W).

4. Device according to Claim 1, **characterized in that** the pressure source (P, P1, P2), for example at least one constant feed pump, can be switched to a pressureless circulation, for example by means of the signal from the switch (G), when the set consumer pressure is reached, and **in that** the circulation pressure corresponds approximately to the maximum pilot pressure, but is preferably slightly higher than the latter.

5. Device according to at least one of Claims 1 to 4, **characterized in that**, upstream of the proportional pilot valve (V), an additional pressure-reducing valve (A) is provided, which, from the pressure from the pressure source (P, P1, P2), preferably a constant feed pump, derives a reduced inlet pressure for the proportional pilot valve (V), which is preferably slightly higher than the maximum settable pilot pressure.

6. Device according to Claim 3, **characterized in that** the safety valve (B) has a valve element (49) acted upon by a spring (50) in the direction of the leakage-free shut-off position, and **in that** the spring (50) is set to a higher, preferably an approximately 10 to approximately 100% higher, pressure value than the maximum settable pilot pressure.

7. Device according to Claim 1, **characterized in that** the safety valve is a hydraulically releasable seat valve (51) and has a function indicator (K), preferably an electrical switch (S) or a pressure switch, which is set to a response pressure value representing an electrical or hydraulic operating fault or to a response position of a component of the safety valve (B).

8. Device according to at least one of the preceding claims, **characterized in that** a specific control-pressure circuit (22) connected to the inlet of the proportional pilot valve (V), preferably with a specific constant feed pump (P2), is provided, and **in that** the pressure in the control-pressure circuit (22) is set to a pressure only slightly exceeding the maximum settable pilot pressure, for example by means of a pressure limiter (25).

9. Device according to one of the preceding claims, **characterized in that** at least one pump (P) forming the pressure source, in particular for accumulator-charging operation by means of a pressure accumulator (21), is connected, via a non-return valve (23) blocking in the return-flow direction, to the setting valve (D, D') and, upstream of the non-return valve (23), in parallel, to the inlet of the proportional pilot valve (V), preferably via an additional pressure-reducing valve (A), and **in that** an electrical changeover device (24, 25) is provided for a pressureless circulation of the pump at a circulation pressure which is limited to a pressure value just above the maximum settable pilot pressure.

10. Device according to at least one of the preceding claims, **characterized in that** the differential-pressure switching valve (F) is connected to only one consumer line (16 or 17) via the reference-pressure control line (15).

11. Device according to at least one of the preceding claims, **characterized in that** a specific differential-pressure switching valve (F) with a switch (G) is provided for each consumer line (16, 17).

12. Device according to at least one of the preceding claims, **characterized in that** the reference-pressure control line (15) is connected via an exchange valve (28) to two consumer lines (16, 17) and can be connected as a function of pressure, via the exchange valve (28), to the consumer line (16 or 17) at the higher consumer pressure in each case.

13. Device according to at least one of the preceding claims, **characterized in that** the differential-pressure switching valve (F) contains a spring (13) acting counter to the pilot pressure.

## Revendications

1. Dispositif de serrage électrohydraulique (S), en particulier pour un outil ou une pièce dans une machine-outil, comprenant un moteur hydraulique de serrage (W) qui peut être raccordé à une source de pression (P, P1, P2) ou à un retour (T) au moyen d'un distributeur (J), disposé dans au moins une conduite de consommateur, et d'un dispositif de réglage de la pression de serrage (E), réglable électriquement, le dispositif de réglage de la pression de serrage (E) comportant :
- une soupape de réglage à commande pilote (D, D') en amont du distributeur (J) pour la pression d'alimentation du moteur hydraulique (W), cette soupape présentant pour le réglage de la pression d'alimentation un élément de réglage (8) chargé par un ressort (R), dont la force effective peut être réglée hydrauliquement par une pression pilote au moyen d'un piston de réglage (9),
- une soupape pilote proportionnelle (V) entre le piston de réglage (9) et la source de pression (P, P1, P2) ou le retour (T) pour régler la pression pilote pour le piston de réglage (9) en fonction de l'alimentation en courant d'un aimant proportionnel (6),
- une soupape de sûreté (B), disposée entre la soupape pilote proportionnelle (V) et le piston de réglage (9), pour séparer automatiquement, sans fuite, le piston de réglage (9) de la soupape pilote proportionnelle (V) au moins en cas de coupure de courant ou d'arrêt d'urgence,
- et au moins un interrupteur électrique (G) qui annonce par un signal, au moyen d'une pression de référence dérivée de la pression d'alimentation du moteur hydraulique, que la pression d'alimentation réglée est atteinte, fait défaut, ou est dépassée par le bas, **caractérisé en ce qu'**il est prévu, pour l'actionnement de l'interrupteur (G), une soupape de commande à pression différentielle (F) séparée dans sa construction de l'élément de réglage (8) de la soupape de réglage (D, D') et qui peut être alimentée par la pression de référence contre la pression pilote, réglée à une valeur essentiellement plus faible par rapport à la pression de référence, et **en ce que** le point de commutation de l'interrupteur (G) est adaptable électrohydrauliquement, au moyen de la soupape pilote proportionnelle (V), à la pression d'alimentation respective réglée.

2. Dispositif suivant la revendication 1, **caractérisé en ce que** la soupape de commande à pression différentielle (F), dans la position de fermeture du dispositif de serrage (S), peut être isolée sans fuite de la source de pression (P, P1, P2) ou du retour (T) et de la soupape pilote proportionnelle (V).

3. Dispositif suivant la revendication 2, **caractérisé en ce que** le distributeur (J) est réglable entre une position de fermeture et au moins une position de commande et est réalisé sous forme de soupape à siège (18) avec une position de fermeture sans fuite de la conduite de consommateur (16, 17) menant au moteur hydraulique (W), et **en ce qu'**une conduite pilote de pression de référence (15) part de la conduite de consommateur (16, 17) entre le distributeur (J) et le moteur hydraulique (W).

4. Dispositif suivant la revendication 1, **caractérisé en ce que** la source de pression (P, P1, P2), par exemple au moins une pompe d'alimentation à cylindrée constante, est commutable sur circulation sans pression, par exemple au moyen du signal de l'interrupteur (G) lorsqu'est atteinte la pression de consommateur réglée, et **en ce que** la pression de circulation correspond à peu près à la pression pilote maximale, est de préférence légèrement supérieure à cette dernière.

5. Dispositif suivant l'une au moins des revendications 1 à 4, **caractérisé en ce qu'**une soupape de réduction de pression supplémentaire (A), prévue en amont de la soupape pilote proportionnelle (V), dérive de la pression de la source de pression (P, P1, P2), de préférence une pompe d'alimentation à cylindrée constante, une pression d'entrée réduite pour la soupape pilote proportionnelle (V), qui est de préférence légèrement supérieure à la pression pilote maximale réglable.

6. Dispositif suivant la revendication 3, **caractérisé en ce que** la soupape de sûreté (B) présente un élément de soupape (49) sollicité par un ressort (50) en direction de la position de fermeture sans fuite, et **en ce que** le ressort (50) est réglé à une valeur de pression supérieure, de préférence d'environ 10 à 100%, à la pression pilote maximale réglable.

7. Dispositif suivant la revendication 1, **caractérisé en ce que** la soupape de sûreté est une soupape à siège (51) déblocable hydrauliquement et présente un avertisseur de fonction (K), de préférence un interrupteur électrique (S) ou un contacteur manométrique, qui est réglé sur une valeur de pression de réponse représentant un dysfonctionnement électrique ou hydraulique ou sur une position de réponse d'un composant de la soupape de sûreté (B).

8. Dispositif suivant l'une au moins des revendications précédentes, **caractérisé en ce qu'**il est prévu un circuit de pression de commande propre (22) raccordé à l'entrée de la soupape pilote proportionnelle (V), de préférence avec une pompe d'alimentation à cylindrée constante propre (P2), et **en ce que** la pression dans le circuit de pression de commande (22) est réglée à une valeur ne dépassant que légèrement par le haut la pression pilote maximale réglable, par exemple par un limiteur de pression (25).

9. Dispositif suivant l'une des revendications précédentes, **caractérisé en ce qu'**au moins une pompe (P) formant la source de pression, en particulier pour le régime de chargement au moyen d'un accumulateur de pression (21), est raccordée à la soupape de réglage (D, D') par l'intermédiaire d'une soupape antiretour (23) fermant en direction du retour et est raccordée en parallèle, en amont de la soupape antiretour (23), à l'entrée de la soupape pilote proportionnelle (V), de préférence par l'intermédiaire d'une soupape de réduction de pression supplémentaire (A), et **en ce qu'**il est prévu un dispositif de permutation électrique (24, 25) pour la circulation sans pression de la pompe avec une pression de circulation limitée à une valeur tout juste au-dessus de la pression pilote maximale réglable.

10. Dispositif suivant l'une au moins des revendications précédentes, **caractérisé en ce que** la soupape de commande à pression différentielle (F) est raccordée à une seule conduite de consommateur (16 ou 17) par l'intermédiaire de la conduite pilote de pression de référence (15).

11. Dispositif suivant l'une au moins des revendications précédentes, **caractérisé en ce qu'**une soupape de commande à pression différentielle (F) avec un interrupteur (G) est prévue pour chaque conduite de consommateur (16, 17).

12. Dispositif suivant au moins les revendications précédentes, **caractérisé en ce que** la conduite pilote de pression de référence (15) est raccordée à deux conduites de consommateur (16, 17) par l'intermédiaire d'une soupape à deux voies (28) et peut être raccordée en fonction de la pression, par l'intermédiaire de la soupape à deux voies (28), à la conduite de consommateur (16 ou 17) avec la pression de consommateur respective supérieure.

13. Dispositif suivant l'une au moins des revendications précédentes, **caractérisé en ce que** la soupape de commande à pression différentielle (F) comporte un ressort (13) agissant contre la pression pilote.
